# EUROPEAN PATENT SPECIFICATION

(11) **EP 2 884 609 B1**
(45) Date of publication and mention of the grant of the patent: **07.09.2016**
(21) Application number: 14197443.6
(22) Date of filing: 11.12.2014
(51) Int. Cl.: H02G 3/06

(54) **Device for connecting cable trays at an angle**
Vorrichtung zum Verbinden von Kabeltrassen in einem Winkel
Dispositif pour relier des chemins de câbles au niveau d'un angle

(30) Priority: 16.12.2013 ES 201331448 U
(43) Date of publication of application: 17.06.2015
(73) Proprietor: Unex Aparellaje Electrico S.L., 08903 L'Hospitalet de Llobregat (Barcelona) (ES)
(72) Inventor: Mostazo Oviedo, José Antonio, 08940 Cornellà de Llobregat (ES)
(74) Representative: Curell Suñol S.L.P.

(56) References cited:
- EP-A1- 1 026 802
- EP-A1- 2 485 351
- BE-A- 678 424

## Description

### Field of the Invention

The invention is comprised in the field of cable trays usually used for guiding electric cables, fiber optic cables or other type of cables traversing a space.

The invention relates to a device for connecting cable trays at an angle, of the type consisting of a linking part for linking the ends of two cable trays, said linking part having two rigid end portions, each of them intended for being fitted with a corresponding end portion of a cable tray, said two rigid end portions each comprising a planar base intended for being supported on a corresponding planar surface of the cable tray, and a central portion joining said two rigid end portions and providing a direction change angle between same.

### State of the Art

The applicant has previously developed a device for connecting cable trays at an angle described in document ES1041979U, in which the linking part is a completely rigid one-piece plastic part providing a fixed direction change angle between cable trays.

Other devices for connecting cable trays at an angle in which the linking part is formed by several parts and comprises a mechanical articulation which allows providing a variable direction change angle between cable trays are known. These linking parts with mechanical articulation have the drawback that the manufacturing cost is high and the mechanical articulation is an element that can get in the way of or complicate the operation of installing the linking part and can accidentally snag the cables extended in the cable trays.

Document EP2485351A1 discloses a device for connecting cable trays as defined in the preamble of claim 1, in which the linking part is formed by several parts made of sheet metal.

### Brief Description of the Invention

The object of the invention is to provide a device for connecting cable trays at an angle of the type indicated above, which allows providing a variable direction change angle between cable trays and does not have the aforementioned drawbacks.

This object is achieved by means of a device for connecting cable trays at an angle of the type indicated above, characterized in that the linking part is a one-piece plastic part and the central portion of said linking part comprises a plate-shaped section sized such that it is capable of experiencing elastic bending providing a variation of at least 30 degrees, preferably at least 40 degrees, in the direction change angle between the rigid end portions of said linking part (or in other words, in the direction change angle between two cable trays joined by said linking part).

This configuration according to the invention allows manufacturing the linking part at a lower cost, with a single mold and without requiring any assembly. Furthermore, the linking part thus formed is easy to install. Particularly, it will be observed that when the linking part is installed joining two cable trays with a direction change angle, the elastic bending of the central portion of said linking part provides an elastic return force that contributes to securing the fastening of said linking part to the cable trays. Furthermore, as a result of the articulation function provided by the suitably sized plate-shaped section, the linking part can be advantageously designed so that possible interference with the cables does not create any problems.

Based on the invention defined in the main claim, preferred embodiments have been provided, the features of which are described in the dependent claims.

In a first group of embodiments, the direction change angle is the angle formed by the two geometric planes going through the two planar bases of the two rigid end portions, respectively, and the plate-shaped section in the central portion of the linking part follows a two-dimensional geometric shape the generatrix of which is parallel to the line intersecting said two geometric planes.

In a second group of embodiments, the direction change angle is the angle formed by the two geometric planes orthogonal to the two planar bases of the two rigid end portions, respectively, and the plate-shaped section in the central portion of the linking part follows a two-dimensional geometric shape the generatrix of which is parallel to the line intersecting said two geometric planes.

These embodiments can advantageously incorporate, alone or in combination, the preferred features described below.

Preferably, in a resting position in which the plate-shaped section in the central portion of the linking part is not experiencing elastic bending, the direction change angle is zero, i.e., the two planar bases of the two rigid end portions are coplanar.

In the first group of embodiments, in said resting position the plate-shaped section in the central portion of the linking part preferably has an arched shape, forming a bridge with respect to the plane going through the two planar bases of the two rigid end portions.

In the second group of embodiments, preferably, the plate-shaped section in the central portion of the linking part is a straight section, and said central portion of the linking part has at each of its two ends a width decreasing progressively from said end until converging with the thickness of said plate-shaped section. Said central portion of the linking part preferably has a U-shaped concave surface having rounded corners on each side of the plane going through said straight plate-shaped section.

In some embodiments intended for mainly being applied in conventional cable trays of the type formed by a U-shaped profile, each of the two rigid end portions of the linking part comprises two fins extending, respectively, from a face of the planar base along each of the two longitudinal sides of said planar base. One fin is preferably taller than the other fin in each of the two rigid end portions of the linking part. The taller fin is preferably provided with elongated holes extending in the longitudinal direction of the linking part. Furthermore, the shorter fin is preferably provided with a notch located closer to the central portion than to the end of the planar base opposite said central portion.

In other embodiments intended for mainly being applied in cable trays of the type known as a "ladder tray" (a tray constructed with two parallel U-shaped profiles, oriented with their flanges facing outwards and joined by longitudinal crossbar-type plates intended for forming a seat for the cables), each of the two rigid end portions of the linking part consists of the planar base that has no fins. Each of the two planar bases is preferably provided with an elongated hole extending in the longitudinal direction of the linking part.

The invention also comprises other detail features illustrated in the following detailed description of an embodiment of the invention and in the attached drawings.

### Brief Descrption of the Drawings

The advantages and features of the invention will be understood from the following description in which several preferred embodiments of the invention are described in relation to the drawings with a non-limiting character with respect to the scope of the main claim.
Figures 1 to 4 depict a first embodiment of a linking part which provides the direction change angle according to an axis of rotation parallel to the planar bases of the rigid end portions and is intended for mainly being applied in conventional cable trays of the type formed by a U-shaped profile. Figure 1 is a top view; Figure 2 is a side view; Figure 3 is a profile view; and Figure 4 is a perspective view.
Figures 5 to 7 depict a second embodiment of a linking part which, like the previous embodiment, provides the direction change angle according to an axis of rotation parallel to the planar bases of the rigid end portions, but it differs from the previous embodiment in that it is intended for mainly being applied in "ladder tray"-type cable trays. Figure 5 is a top view; Figure 6 is a side view; and Figure 7 is a perspective view.
Figure 8 shows the first embodiment of the linking part according to Figures 1 to 4 in an assembled position, connecting two cable trays at an angle. Figure 8 is a top view with respect to the cable trays.
Figure 9 is a view similar to Figure 8 for the second embodiment according to Figures 5 to 7.
Figure 10 shows a step for assembling the first embodiment of the linking part according to Figures 1 to 4 for connecting two cable trays at an angle. Figure 10 is a side view with respect to the cable trays.
Figure 11 is a view similar to Figure 10 for the second embodiment according to Figures 5 to 7.
Figure 12 is a detailed section view according to the section plane indicated in Figure 10 for the first embodiment according to Figures 1 to 4, showing a rigid end portion of the linking part fitted with a corresponding end portion of a cable tray.
Figure 13 is a view similar to Figure 12 for the second embodiment according to Figures 5 to 7.
Figures 14 to 17 depict a third embodiment of a linking part which differs from the first embodiment only in the central portion of the fitting part. In this case, the central portion is configured for providing the direction change angle according to an axis of rotation orthogonal to the planar bases of the rigid end portions. Figure 14 is a top view; Figure 15 is a side view; Figure 16 is a profile view; and Figure 17 is a perspective view.
Figures 18 to 20 depict a fourth embodiment of a linking part which differs from the second embodiment only in the central portion of the fitting part. In this case, the central portion is also configured for providing the direction change angle according to an axis of rotation orthogonal to the planar bases of the rigid end portions. Figure 18 is a top view; Figure 19 is a side view; and Figure 20 is a perspective view.
Figure 21 shows the third embodiment of the linking part according to Figures 14 to 17 in an assembled position, connecting two cable trays at an angle. Figure 21 is a side view with respect to the cable trays.
Figure 22 is a view similar to Figure 21 for the fourth embodiment according to Figures 18 to 20.

### Detailed Description of Embodiments of the invention

Four embodiments of the linking part according to the invention are described below, and they share the following features in common:
- the linking part 1 A, 1 B, 2A, 2B has two rigid end portions 3A, 3B, each of them intended for being fitted with a corresponding end portion 4A, 4B of a cable tray 5A, 5B;
- the rigid end portions 3A, 3B each comprises a planar base 8A, 8B intended for being supported on a corresponding planar surface 9A, 9B of the cable tray 5A, 5B, and a central portion 6a, 6b joining said two rigid end portions 3A, 3B and providing a direction change angle α1, α2 between same;
- the linking part 1 A, 1 B, 2A, 2B is a one-piece plastic part and the central portion 6a, 6b thereof comprises a plate-shaped section 7a, 7b sized such that it is capable of experiencing elastic bending providing a variation of at least 30 degrees in the direction change angle α1, α2.

The plastic material forming these linking parts 1 A, 1 B, 2A, 2B can be a PVC-based plastic or a halogen-free thermoplastic, for example.

The four embodiments differ from one another, on one hand, according to the configuration of the central portion 6a, 6b, and on the other hand, according to the configuration of the two rigid end portions 3A, 3B.

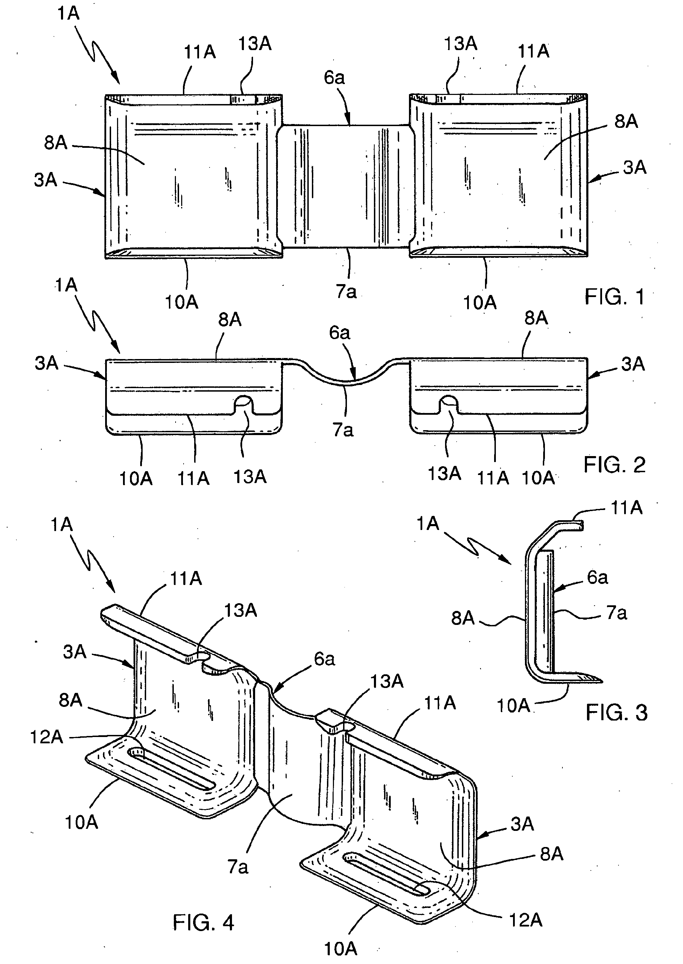

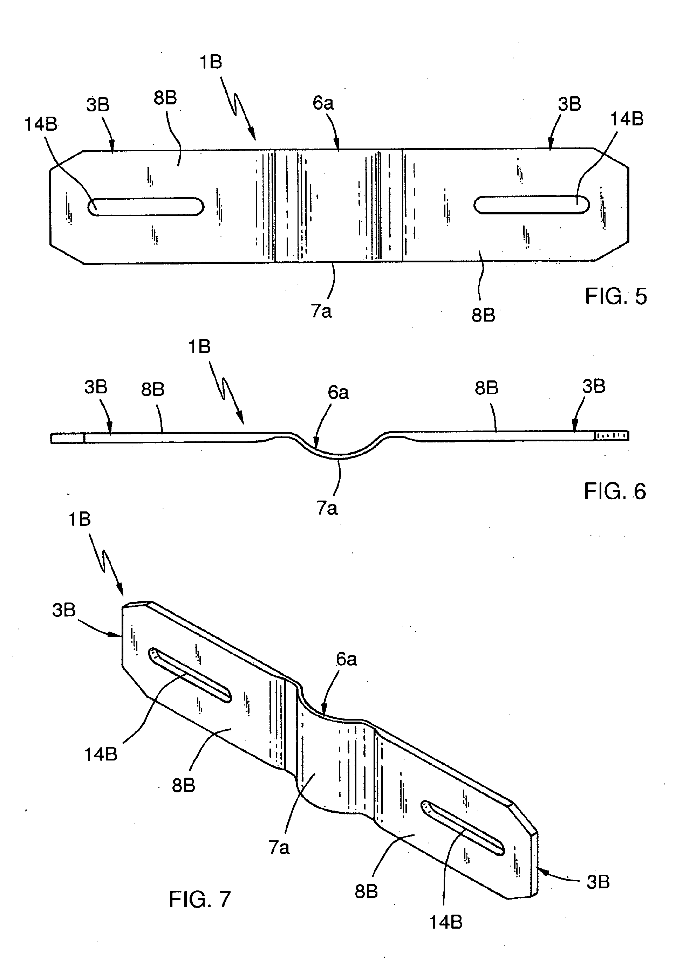

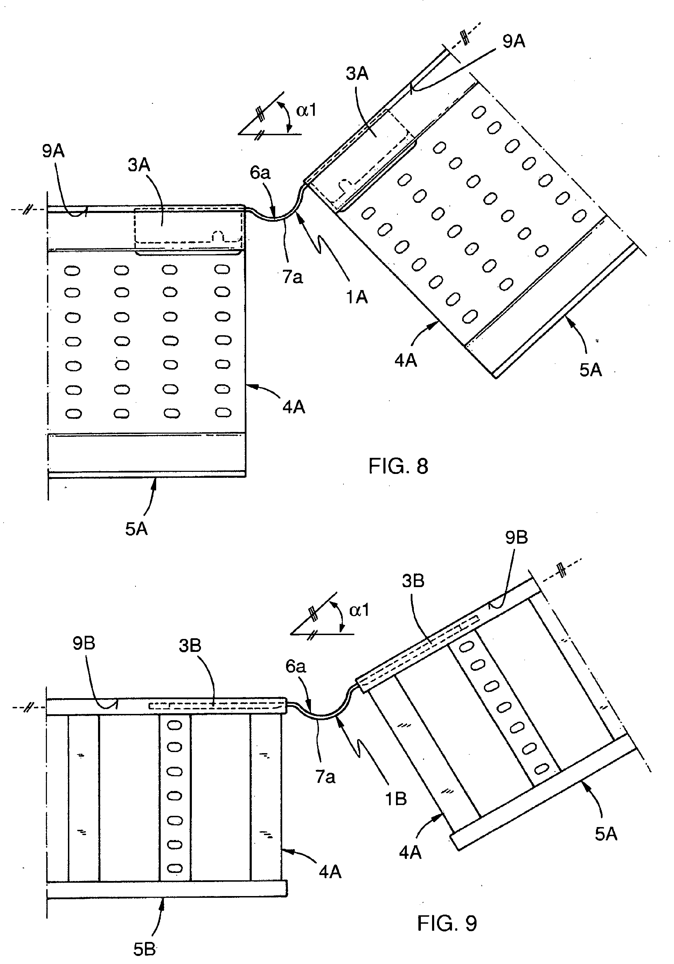

The first embodiment (Figures 1-4, 8, 10 and 12) and second embodiment (Figures 5-7, 9, 11 and 13) relate to linking parts 1A, 1B having one and the same central portion 6a, designed so that the direction change angle is the angle α1 formed by the two geometric planes going through the two planar bases 8A, 8B of the two rigid end portions 3A, 3B, respectively. As seen in Figures 8, 9, 12 and 13, the planar surface 9A, 9B of the cable tray 5A, 5B on which the planar bases 8A, 8B of the linking parts 1 A, 1 B are supported is formed by a side flange of said cable tray 5A, 5B. Therefore, in these embodiments the linking part 1A, 1B allows relative rotation between the two cable trays 5A, 5B according to an axis orthogonal to the main plane thereof, which is the plane on which the cables usually rest.

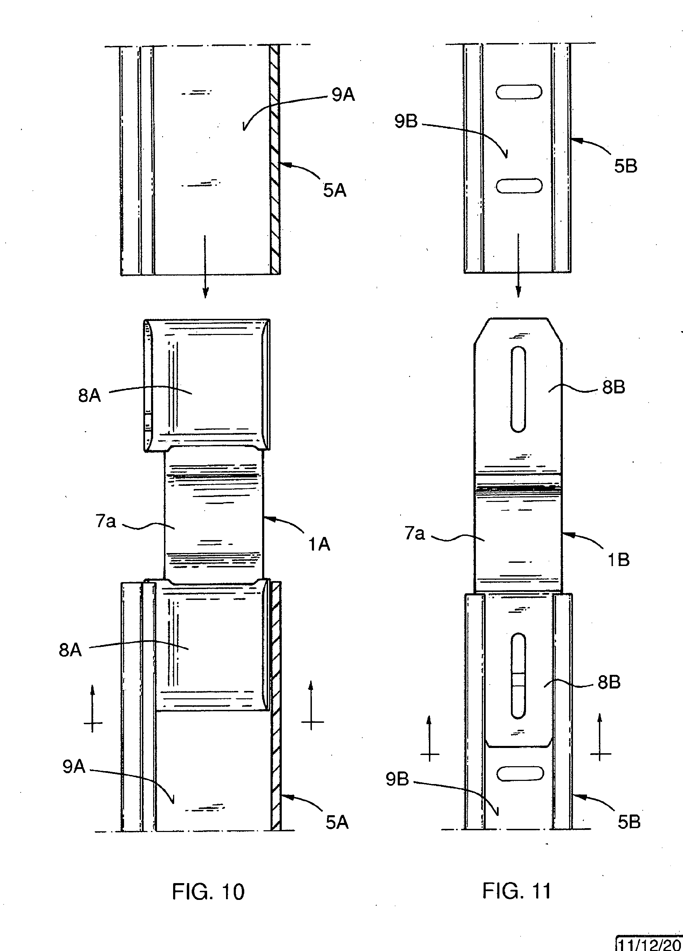

To that end, the plate-shaped section 7a follows a two-dimensional geometric shape the generatrix of which is parallel to the line intersecting the two geometric planes going through the two planar bases 8A, 8B, respectively. Figures 1-4 and Figures 5-7 depict the linking part 1 A, 1 B in its resting position, in which the plate-shaped section 7a is not experiencing elastic bending. In this resting position, the two planar bases 8A, 8B of the rigid end portions 3A, 3B are coplanar, and the direction change angle α1 is zero. In this resting position, the plate-shaped section 7a has an arched shape, forming a bridge with respect to the plane going through the two planar bases 8A, 8B. Figures 10 and 11 show the operation of fitting the linking parts 1 A, 1 B with cable trays 5A, 5B. It will be observed that these drawings depict a side view of the cable trays 5A, 5B, whereas Figures 8 and 9 depict a top view of the cable trays 5A, 5B. The user applies enough force on the cable trays 5A, 5B so that the plate-shaped section 7a changes from the resting position shown in Figures 2 and 6 to the elastic bending position shown in Figures 8 and 9. In this elastic bending position, the linking part 1 A, 1B applies a return force to return to the aligned position. Therefore to maintain the direction change position, the cable trays 5A, 5B must be fixed in this position to the walls or structures along which they run, using conventional fixing elements to that end. An angle α1 of at least 30 degrees, preferably at least 40 degrees, can be achieved, maintaining elastic deformation and without any risk of breaking or causing permanent plastic deformation. In preferred embodiments, the plate-shaped section 7a is sized such that this angle can reach a value of 90 degrees, so the linking part 1A, 1 B is suitable for linking two cable trays 5A, 5B at a right angle. In the direction change position shown in Figures 8 and 9, the plate-shaped section 7a forms an arched surface preventing the cables from being able to bend too much or from getting snagged on something.

As mentioned, these two first embodiments 1 A, 1 B have the same central portion 6a of the linking part 1 A, 1 B. They only differ in the configuration of the rigid end portions 3A, 3B.

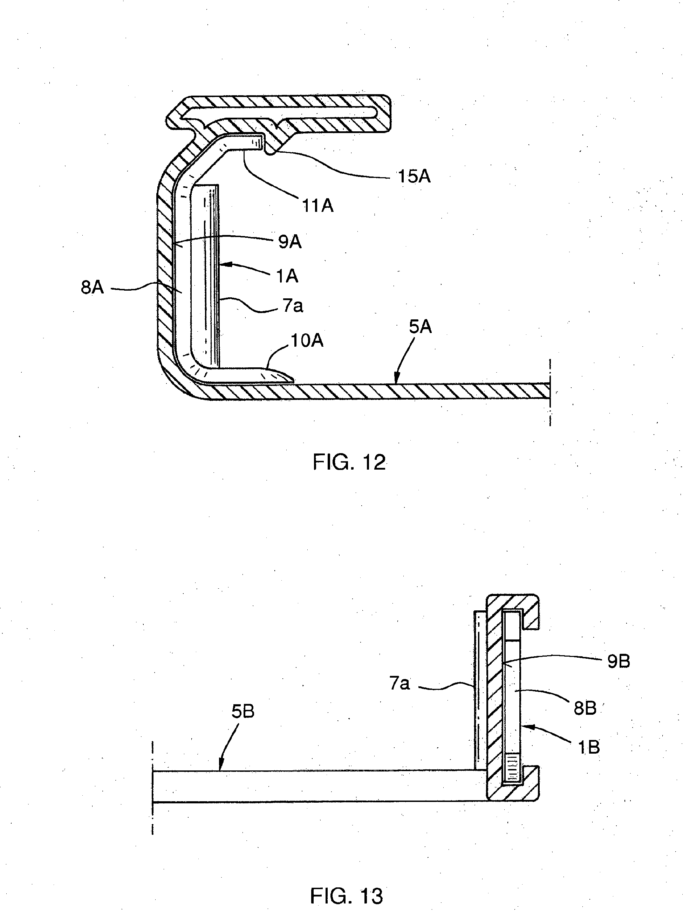

In the first embodiment 1A intended for mainly being applied in conventional cable trays of the type formed by a U-shaped profile, the two rigid end portions 3A are identical to one another and each of them comprises two fins 10A, 11 A extending, respectively, from a face of the planar base 8A along each of the two longitudinal sides of said planar base 8A, one fin 10A being taller than the other fin 11 A. As can be seen in Figure 12, the shorter fin 11 A fits with a corresponding projection 15A envisaged in a lip of the side flange of the cable tray 5A, whereas the taller fin 10A is' supported against the floor of said cable tray 5A. In the direction change position, the linking part 1 A is securely fixed to the cable trays 5A without needing to have fixing means as a result of the elastic return force applied by said linking part 1A in said position. Nevertheless, to make installation easier it is envisaged that the taller fin 10A is provided with elongated holes 12A extending in the longitudinal direction of the linking part 1A for the passage of setscrews (not depicted). The shorter fin 11 A is provided with a notch 13A located closer to the central portion 6a than to the end of the planar base 8A opposite said central portion 6A. The object of this notch 13A is to allow introducing a tool, typically a screwdriver, to act as a lever and to make taking the linking part 1 A out of its position easier when it must be removed from the cable tray 5A.

In the second embodiment 1 B intended for mainly being applied in cable trays of the type known as "ladder tray", each of the two rigid end portions 3B of the linking part 1 B consists of the planar base 8B which in this case has no fins. As can be seen in Figure 13, the planar base 8B fits in a guided manner with the outer face of one of the two U-shaped profiles forming the sides of the "ladder tray". In the direction change position shown in Figure 9, the linking part 1 B is securely fixed to the cable trays 5A without needing to have fixing means as a result of the elastic return force applied by said linking part 1 B in said position. Nevertheless, to make installation easier it is envisaged that the planar bases 8B are provided with an elongated hole 14B extending in the longitudinal direction of said linking part 1 B for the passage of setscrews.

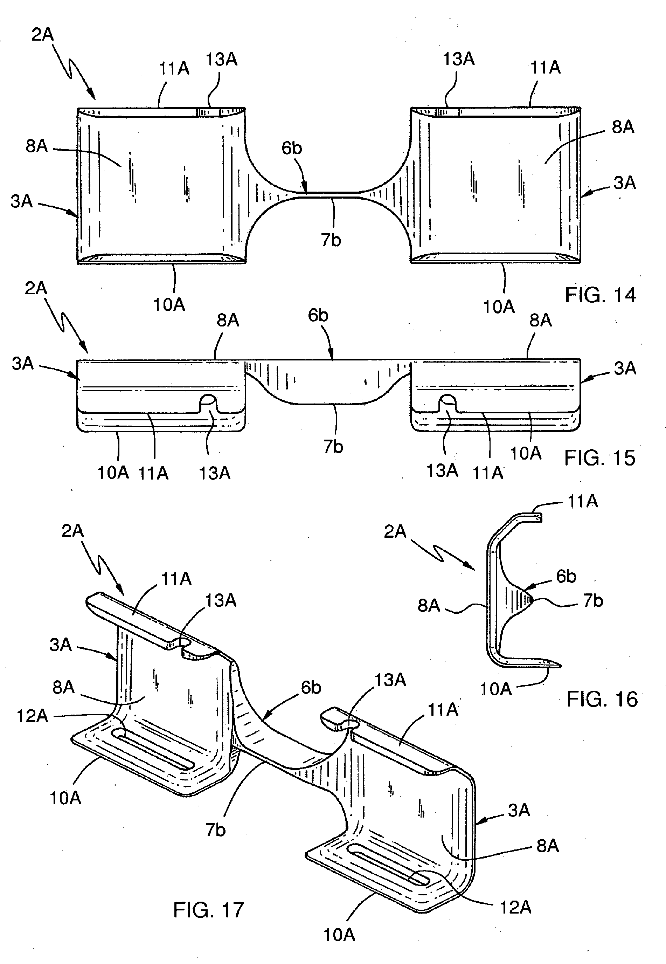

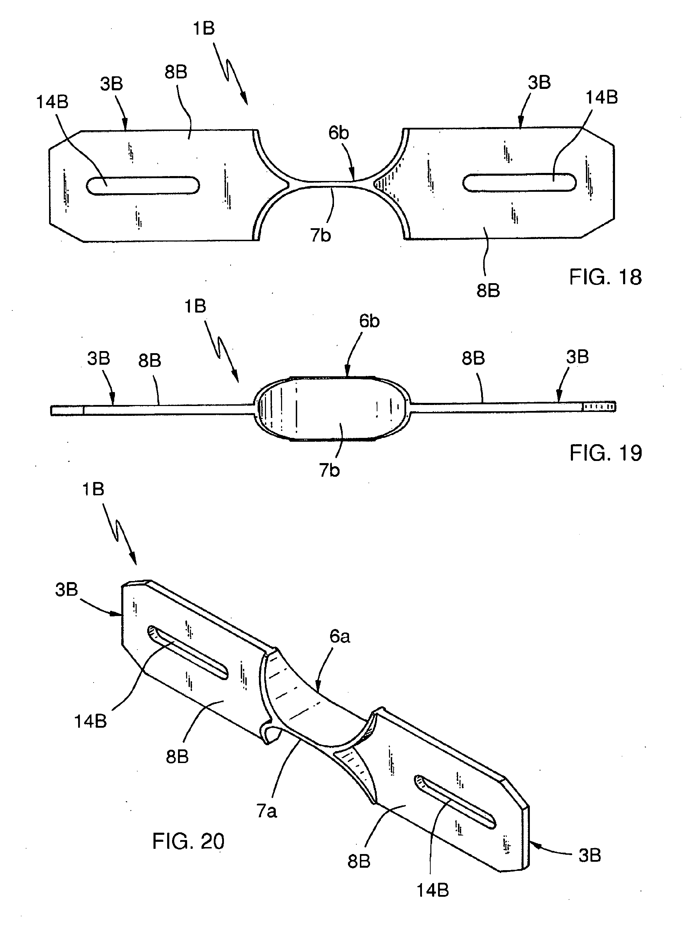

In the third embodiment (Figures 14-17 and 21) and fourth embodiment (Figures 18-20 and 22), the rigid end portions 3A, 3B of the linking part 2A, 2B are the same as in the first embodiment 1 A and second embodiment 1 B, respectively. They only differ from the first and second embodiments in the central portion 6b, which in this case is designed so that the direction change angle is the angle α2 formed by the two geometric planes orthogonal to the two planar bases 8A, 8B of the rigid end portions 3A, 3B, respectively. In these embodiments, the linking part 2A, 2B allows relative rotation between the two cable trays 5A, 5B according to an axis parallel to the main plane of the cable trays 5A, 5B, which is the plane on which the cables usually rest.

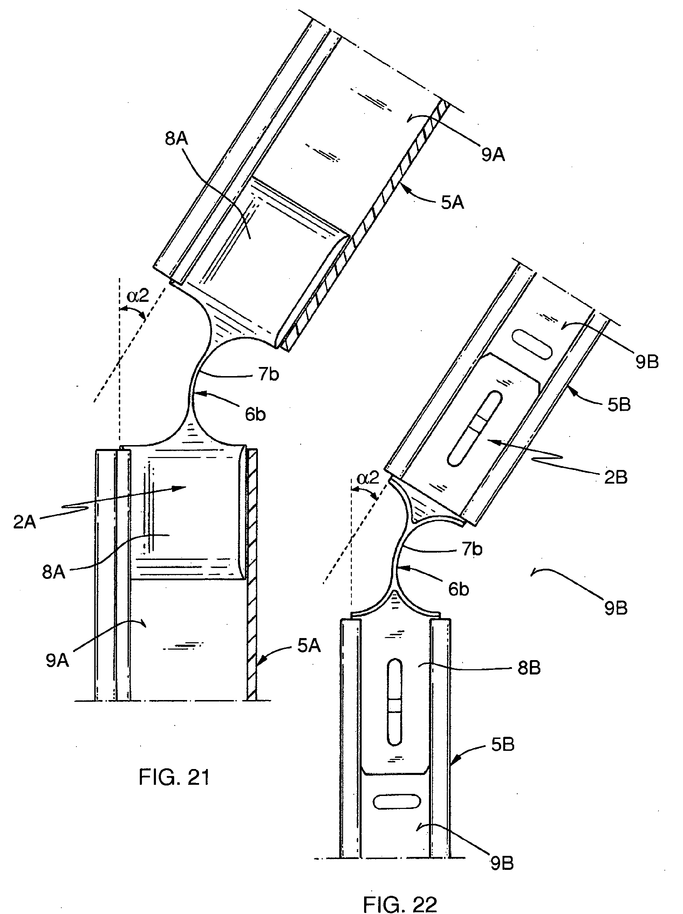

To that end, the plate-shaped section 7b follows a two-dimensional geometric shape the generatrix of which is parallel to the line intersecting the two geometric planes orthogonal to the two planar bases 8A, 8B. The plate-shaped section 7b is a straight section, and the central portion 6b of the linking part 2A, 2B has at each of its two ends a width decreasing progressively from said end until converging with the thickness of said plate-shaped section 7b, such that said central portion 6b has a U-shaped concave surface having rounded corners on each side of the plane going through said straight plate-shaped section 7b. Figures 14-17 and Figures 18-20 depict the linking part 2A, 2B in its resting position, in which the plate-shaped section 7b is not experiencing elastic bending. In this resting position, the two planar bases 8A, 8B of the rigid end portions 3A, 3B are coplanar and aligned, and the direction change angle α2 is zero. As in the case of the first and second embodiments, the user applies enough force on cable trays 5A, 5B so that the plate-shaped section 7b changes position to the elastic bending position shown in Figures 21 and 22. In this elastic bending position, the linking part 2A, 2B applies a return force to return to the aligned position, so to maintain the direction change position, the cable trays 5A, 5B must be fixed in this position to the walls or structures along which they run, using to that end conventional fixing elements. An angle α2 of at least 30 degrees, preferably at least 40 degrees, can be achieved, maintaining elastic deformation and without any risk of breaking or causing permanent plastic deformation. In preferred embodiments, the plate-shaped section 7b is sized such that this angle can reach a value of 90 degrees, so the linking part 2A, 2B is suitable for linking two cable trays 5A, 5B at a right angle.

Several variations with respect to the embodiments herein described are possible. Different configurations of the rigid end portions 3A, 3B can particularly be envisaged for adapting them to different cable trays.

## Claims

1. A device for connecting cable trays at an angle, consisting of a linking part (1A, 1 B, 2A, 2B) for linking the ends of two cable trays, said linking part (1A, 1 B, 2A, 2B) having two rigid end portions (3A, 3B), each of them intended for being fitted with a corresponding end portion (4A, 4B) of a cable tray (5A, 5B), said two rigid end portions (3A, 3B) each comprising a planar base (8A, 8B), intended for being supported on a corresponding planar surface (9A, 9B) of the cable tray (5A, 5B), and a central portion (6a, 6b) joining said two rigid end portions (3A, 3B) and providing a direction change angle (α1, α2) between same, **characterized in that** said linking part (1 A, 1 B, 2A, 2B) is a one-piece plastic part and said central portion (6a, 6b) of said linking part (1A, 1B, 2A, 2B) comprises a plate-shaped section (7a, 7b) sized such that it is capable of experiencing elastic bending providing a variation of at least 30 degrees in said direction change angle (α1, α2).

2. The device according to claim 1, **characterized in that** said direction change angle (α1) is the angle formed by the two geometric planes going through said two planar bases (8A, 8B) of the two rigid end portions (3A, 3B), respectively, and **in that** said plate-shaped section (7a) in the central portion (6a) of the linking part (1A, 1 B) follows a two-dimensional geometric shape the generatrix of which is parallel to the line intersecting said two geometric planes.

3. The device according to claim 1, **characterized in that** said direction change angle (α2) is the angle formed by the two geometric planes orthogonal to said two planar bases (8A, 8B) of the two rigid end portions (3A, 3B), respectively, and **in that** said plate-shaped section (7b) in the central portion (6b) of the linking part (2A, 2B) follows a two-dimensional geometric shape the generatrix of which is parallel to the line intersecting said two geometric planes.

4. The device according to any of claims 1 to 3, **characterized in that** in a resting position in which said plate-shaped section (7a, 7b) in the central portion (6a) of the linking part (1A, 1 B) is not experiencing elastic bending, said direction change angle (α1, α2) is zero, i.e., said two planar bases (8A, 8B) of the two rigid end portions (3A, 3B) are coplanar.

5. The device according to claims 2 and 4, **characterized in that** in said resting position said plate-shaped section (7a) in the central portion (6a) of the linking part (1A, 1B) has an arched shape, forming a bridge with respect to the plane going through said two planar bases (8A, 8B) of the two rigid end portions (3A, 3B).

6. The device according to claims 3 and 4, **characterized in that** said plate-shaped section (7b) in the central portion (6b) of the linking part (2A, 2B) is a straight section, and said central portion (6b) of the linking part (2A, 2B) has at each of its two ends a width decreasing progressively from said end until converging with the thickness of said plate-shaped section (7b).

7. The device according to claim 6, **characterized in that** said central portion (6b) of the linking part (2A, 2B) has a U-shaped concave surface having rounded corners on each side of the plane going through said straight plate-shaped section (7b).

8. The device according to any of claims 1 to 7, **characterized in that** each of said two rigid end portions (3A) of the linking part (1 A, 2A) comprises two fins (10A, 11 A) extending, respectively, from a face of said planar base (8A) along each of the two longitudinal sides of said planar base (8A).

9. The device according to claim 8, **characterized in that** one of said fins (10A) is taller than the other fin (11 A) in each of said two rigid end portions (3A) of the linking part (1A, 2A).

10. The device according to claim 9, **characterized in that** the taller fin (10A) is provided with elongated holes (12A) extending in the longitudinal direction of said linking part (1A, 2A).

11. The device according to claims 9 or 10, **characterized in that** the shorter fin (11 A) is provided with a notch (13A) located closer to said central portion (6a, 6b) than to the end of said planar base (8A) opposite said central portion (6a, 6b).

12. The device according to any of claims 1 to 7, **characterized in that** each of said two rigid end portions (3B) of the linking part (1 B, 2B) consists of said planar base (8B) that has no fins.

13. The device according to claim 12, **characterized in that** each of said two planar bases (8B) is provided with an elongated hole (14B) extending in the longitudinal direction of said linking part (1 B, 2B).

## Patentansprüche

1. Vorrichtung zum Verbinden von Kabeltrassen in einem Winkel, bestehend aus einem Verbindungsteil (1A, 1B, 2A, 2B) zum Verbinden der Enden von zwei Kabeltrassen, wobei das Verbindungsteil (1A, 1B, 2A, 2B) zwei feste Endbereiche (3A, 3B) hat, die jeweils dazu ausgelegt sind, eine Steckverbindung mit einem entsprechenden Endbereich (4A, 4B) einer Kabeltrasse (5A, 5B) zu erzeugen, wobei die festen Endbereiche (3A, 3B) jeweils eine ebene Basis (8A, 8B) umfassen, die dazu ausgelegt ist, von einer entsprechenden ebenen Fläche (9A, 9B) der Kabeltrasse (5A, 5B) getragen zu werden, sowie einen Mittelbereich (6a, 6b), der die beiden festen Endbereiche (3A, 3B) verbindet und einen Richtungsänderungswinkel (α1, α 2) zwischen diesen erzeugt, **dadurch gekennzeichnet, dass** das Verbindungsteil (1A, 1B, 2A, 2B) ein einstückiges Plastikteil ist und der Mittelbereich (6a, 6b) dieses Verbindungsteils (1A, 1B, 2A, 2B) einen plattenförmigen Abschnitt (7a, 7b) umfasst, der so bemessen ist, dass er eine elastische Biegung erfahren kann und eine Variation von wenigstens 30 Grad in dem Richtungsänderungswinkel (α1, α2) ermöglicht.

2. Die Vorrichtung nach Anspruch 1, **dadurch gekennzeichnet, dass** der Richtungsänderungswinkel (α1) der Winkel ist, der durch die beiden geometrischen Ebenen gebildet wird, welche jeweils durch die beiden ebenen Basen (8A, 8B) der beiden festen Endbereiche (3A, 3B) verlaufen, und dass der plattenförmige Abschnitt (7a) in dem Mittelbereich (6a) des Verbingungsteils (1A, 1B) einer zweidimensionalen geometrischen Form folgt, deren Mantellinie parallel zu der Schnittlinie der beiden geometrischen Ebenen verläuft.

3. Die Vorrichtung nach Anspruch 1, **dadurch gekennzeichnet, dass** der Richtungsänderungswinkel (α2) durch die beiden geometrischen Ebenen gebildet wird, die jeweils orthogonal zu den ebenen Basen (8A, 8B) der beiden festen Endbereiche (3A, 3B) verlaufen, und dass der plattenförmige Abschnitt (7b) in dem Mittelbereich (6b) des Verbingungsteils (2A, 2B) einer zweidimensionalen geometrischen Form folgt, deren Mantellinie parallel zu der Schnittlinie dieser beiden geometrischen Ebenen verläuft.

4. Vorrichtung nach einem der Ansprüche 1 bis 3, **dadurch gekennzeichnet, dass** in einer Ruheposition, in welcher der plattenförmige Abschnitt (7a, 7b) in dem Mittelbereich (6a) des Verbingungsteils (1A, 1B) keine elastische Biegung erfährt, der Richtungsänderungswinkel (α1, α2) Null beträgt, also die beiden ebenen Basen (8A, 8B) der beiden festen Endbereiche (3A, 3B) koplanar ausgerichtet sind.

5. Vorrichtung nach den Ansprüchen 2 und 4, **dadurch gekennzeichnet, dass** in der Ruheposition der plattenförmige Abschnitt (7a) des Mittelbereichs (6a) des Verbingungsteils (1A, 1B) eine gebogene Form hat, welche eine Brücke in Bezug auf die durch die beiden ebenen Basen (8A, 8B) der beiden festen Endbereiche (3A, 3B) verlaufende Ebene bildet.

6. Vorrichtung nach einem der Ansprüche 3 und 4, **dadurch gekennzeichnet, dass** der plattenförmige Abschnitt (7b) des Mittelbereichs (6b) des Verbingungsteils (2A, 2B) ein gerader Abschnitt ist und der Mittelbereich (6b) des Verbingungsteils (2A, 2B) zwei Enden hat, die jeweils eine fortschreitend von diesem Ende aus abnehmende Breite haben, bis diese mit der Dicke des plattenförmigen Abschnitts (7b) zusammenfällt.

7. Vorrichtung nach Anspruch 6, **dadurch gekennzeichnet, dass** der Mittelbereich (6b) des Verbingungsteils (2A, 2B) eine U-förmige konkave Oberfläche hat, die an jeder Seite der durch den geraden plattenförmigen Abschnitt (7b) verlaufenden Ebene abgerundete Ecken hat.

8. Vorrichtung nach einem der Ansprüche 1 bis 7, **dadurch gekennzeichnet, dass** jeder der beiden festen Endbereiche (3A) des Verbindungsteils (1A, 2A) zwei Formgrate (10A, 11A) hat, die jeweils von einer Fläche der ebenen Basis (8A) entlang jeder der beiden Längsseiten der ebenen Basis (8A) vorspringen.

9. Vorrichtung nach Anspruch 8, **dadurch gekennzeichnet, dass** in jedem der beiden festen Endbereiche (3A) des Verbindungsteils (1A, 2A) einer der beiden Formgrate (10A) größer als der andere Formgrat (11A) ist.

10. Vorrichtung nach Anspruch 9, **dadurch gekennzeichnet, dass** der größere Formgrat (10A) mit länglichen Löchern (12A) ausgestattet ist, die sich in der Längsrichtung des Verbindungsteils (1A, 2A) erstrecken.

11. Vorrichtung nach Anspruch 9 oder 10, **dadurch gekennzeichnet, dass** der kürzere Formgrat (11A) mit einer Nut (13A) ausgestattet ist, die näher an dem Mittelbereich (6a, 6b) als das Ende der ebenen Basis (8A), die diesem Mittelbereich (6a, 6b) gegenüber angeordnet ist.

12. Vorrichtung nach einem der Ansprüche 1 bis 7, **dadurch gekennzeichnet, dass** jeder der beiden festen Endbereiche (3B) des Verbindungsteils (1B, 2B) aus der ebenen Basis (8B) ohne Formgrate besteht.

13. Vorrichtung nach Anspruch 12, **dadurch gekennzeichnet, dass** jede der beiden ebenen Basen (8B) mit einem länglichen Loch (14B) ausgestattet ist, welches sich in der Längsrichtung des Verbindungsteils (1B, 2B) erstreckt.

## Revendications

1. Dispositif de raccordement de chemins de câbles en formant un angle, constitué d'une pièce de liaison (1A, 1B, 2A, 2B) permettant de relier les extrémités de deux chemins de câbles, ladite pièce de liaison (1A, 1B, 2A, 2B) ayant deux portions d'extrémité rigides (3A, 3B), chacune d'entre elles étant prévue pour être dotée d'une portion d'extrémité correspondante (4A, 4B) d'un chemin de câbles (5A, 5B), lesdites deux portions d'extrémité rigides (3A, 3B) comprenant chacune une base planaire (8A, 8B), prévue pour être supportée sur une surface planaire correspondante (9A, 9B) du chemin de câbles (5A, 5B), et une portion centrale (6a, 6b) joignant lesdites deux portions d'extrémité rigides (3A, 3B) et fournissant un angle de changement de direction (α1, α2) entre elles, **caractérisé en ce que** ladite pièce de liaison (1A, 1B, 2A, 2B) est une pièce en plastique monobloc et ladite portion centrale (6a, 6b) de ladite pièce de liaison (1A, 1B, 2A, 2B) comprend une section en forme de plaque (7a, 7b) dimensionnée de sorte qu'elle soit capable de subir une flexion élastique fournissant une variation d'au moins 30 degrés dudit angle de changement de direction (α1, α2).

2. Dispositif selon la revendication 1, **caractérisé en ce que** ledit angle de changement de direction (α1) est l'angle formé par les deux plans géométriques traversant lesdites deux bases planaires (8A, 8B) des deux portions d'extrémité rigides (3A, 3B), respectivement, et **en ce que** ladite section en forme de plaque (7a) dans la portion centrale (6a) de la pièce de liaison (1A, 1B) suit une forme géométrique bidimensionnelle dont la génératrice est parallèle à la droite coupant lesdits deux plans géométriques.

3. Dispositif selon la revendication 1, **caractérisé en ce que** ledit angle de changement de direction (α2) est l'angle formé par les deux plans géométriques orthogonaux auxdites deux bases planaires (8A, 8B) des deux portions d'extrémité rigides (3A, 3B), respectivement, et **en ce que** ladite section en forme de plaque (7b) dans la portion centrale (6b) de la pièce de liaison (2A, 2B) suit une forme géométrique bidimensionnelle dont la génératrice est parallèle à la droite coupant lesdits deux plans géométriques.

4. Dispositif selon l'une quelconque des revendications 1 à 3, **caractérisé en ce que** dans une position de repos dans laquelle ladite section en forme de plaque (7a, 7b) dans la portion centrale (6a) de la pièce de liaison (1A, 1B) ne subit pas de flexion élastique, ledit angle de changement de direction (α1, α2) est nul, c'est-à-dire, lesdites deux bases planaires (8A, 8B) des deux portions d'extrémité rigides (3A, 3B) sont coplanaires.

5. Dispositif selon les revendications 2 et 4, **caractérisé en ce que** dans ladite position de repos ladite section en forme de plaque (7a) dans la portion centrale (6a) de la pièce de liaison (1A, 1B) a une forme arquée, formant un pont par rapport au plan traversant lesdites deux bases planaires (8A, 8B) des deux portions d'extrémité rigides (3A, 3B).

6. Dispositif selon les revendications 3 et 4, **caractérisé en ce que** ladite section en forme de plaque (7b) dans la portion centrale (6b) de la pièce de liaison (2A, 2B) est une section droite, et ladite portion centrale (6b) de la pièce de liaison (2A, 2B) a au niveau de chacune de ses deux extrémités une largeur diminuant progressivement à partir de ladite extrémité jusqu'à converger avec l'épaisseur de ladite section en forme de plaque (7b).

7. Dispositif selon la revendication 6, **caractérisé en ce que** ladite portion centrale (6b) de la pièce de liaison (2A, 2B) a une surface concave en forme de U ayant des coins arrondis sur chaque côté du plan traversant ladite section en forme de plaque droite (7b).

8. Dispositif selon l'une quelconque des revendications 1 à 7, **caractérisé en ce que** chacune desdites deux portions d'extrémité rigides (3A) de la pièce de liaison (1A, 2A) comprend deux ailettes (10a, 11A) s'étendant, respectivement, à partir d'une face de ladite base planaire (8A) le long de chacun des deux côtés longitudinaux de ladite base planaire (8A).

9. Dispositif selon la revendication 8, **caractérisé en ce que** l'une desdites ailettes (10A) est plus grande que l'autre ailette (11A) dans chacune desdites deux portions d'extrémité rigides (3A) de la pièce de liaison (1A, 2A).

10. Dispositif selon la revendication 9, **caractérisé en ce que** l'ailette plus grande (10A) est pourvue de trous allongés (12A) s'étendant dans la direction longitudinale de ladite pièce de liaison (1A, 2A).

11. Dispositif selon la revendication 9 ou 10, **caractérisé en ce que** l'ailette plus courte (11A) est pourvue d'une encoche (13A) située plus proche de ladite portion centrale (6a, 6b) que de ladite extrémité de ladite base planaire (8A) opposée à ladite portion centrale (6a, 6b).

12. Dispositif selon l'une quelconque des revendications 1 à 7, **caractérisé en ce que** chacune desdites deux portions d'extrémité rigides (3B) de la pièce de liaison (1B, 2B) est constituée de ladite base planaire (8B) qui n'a aucune ailette.

13. Dispositif selon la revendication 12, **caractérisé en ce que** chacune desdites deux bases planaires (8B) est pourvue d'un trou allongé (14B) s'étendant dans la direction longitudinale de ladite pièce de liaison (1B, 2B).
